**Europäisches Patentamt**

**European Patent Office**

**Office européen des brevets**

(19)

(11) Veröffentlichungsnummer : **0 049 926**
**B1**

(12) # EUROPÄISCHE PATENTSCHRIFT

(45) Veröffentlichungstag der Patentschrift : 25.07.84

(21) Anmeldenummer : 81201102.1

(22) Anmeldetag : 05.10.81

(51) Int. Cl.³ : **F 27 B 3/06**, **C 21 C 5/52**, **H 05 B 7/02**

(54) **Kippbarer Lichtbogenofen.**

(30) Priorität : 09.10.80 CH 7540/80

(43) Veröffentlichungstag der Anmeldung : 21.04.82 Patentblatt 82/16

(45) Bekanntmachung des Hinweises auf die Patenterteilung : 25.07.84 Patentblatt 84/30

(84) Benannte Vertragsstaaten : CH DE FR GB IT LI

(56) Entgegenhaltungen :
CH-A- 485 995
DE-A- 2 253 616
DE-B- 1 084 445
DE-B- 2 109 530
DE-C- 638 867
DE-C- 679 154
DE-C- 702 690
FR-A- 1 213 580
GB-A- 437 333

(73) Patentinhaber : **BBC Aktiengesellschaft Brown, Boveri & Cie.**
**Haselstrasse**
**CH-5401 Baden (CH)**

(72) Erfinder : **Bühler, Karl**
**Oberdorfstrasse 28**
**CH-5415 Oberrohrdorf (CH)**

## Beschreibung

Die Erfindung bezieht sich auf einen kippbaren Lichtbogenofen, mit einem auf einer Tragkonstruktion angeordneten Ofenkessel und einem Deckel wobei der Ofen über einer Plattform auf Abwälzwiegen abgestützt ist und der Ofenkessel wenigstens im wesentlichen senkrecht zur Kipprichtung verfahrbar ist.

Um einen Lichtbogenofen mit festem Einsatzgut zu beschikken, muss dessen Kessel freigelegt werden. Dabei ist es für den Beschickungsvorgang unbedeutend, ob der Ofendeckel einschliesslich Oberofen vom stationär bleibenden Ofenkessel entfernt wird, oder ob der Ofenkessel aus seiner ursprünglichen Lage aus dem Deckelbereich wegbewegt wird. Eine sehr gebräuchliche Art ist, den Ofendeckel einschliesslich Oberofen zur Seite wegzuschwenken. Dabei ist das Deckelhebe- und Schwenkwerk als Drehturm ausgebildet. Da sich der Schwerpunkt des Ofens beim Ausschwenken des Deckels verlagert, werden auf die Wiegen des Ofens Kippmomente ausgeübt, die grösser dimensionierte Konstruktionen erforderlich machen. Ausserdem muss der Schwenkmechanismus aus Sicherheitsgründen verriegelt werden.

Man kann die zusätzlichen konstruktiven Aufwendungen des Deckelschwenkens umgehen, indem man den Kessel aus dem Deckelbereich verschiebt.

Verschiebt man den Kessel in Kipprichtung, so treten wiederum hohe Kippmomente auf. Besonders bei grösseren Oefen können die Kippmomente derart hohe Werte annehmen, dass deren Beherrschung beträchtlichen konstruktiven Aufwand erforderlich machen würde. Wird hingegen der Kessel quer zur Kipprichtung verfahren, so bewegt sich der Kesselschwerpunkt entlang der Wiegenachse und das Kippmoment bleibt klein und beherrschbar.

In dem Sonderdruck « Evolution des Fours à arc type Héroult à chargement rapide » der Brown, Boveri & Cie., Baden/Schweiz aus « La Technique Moderne » vom 15.3.1939 ist ein Ofen der obengenannten Art beschrieben und dargestellt. Gemäss Fig. 6, S. 4, dieser Publikation wird ein auf Rollen gelagerter Ofenkessel eines Lichtbogenofens von einer mit Abwälzwiegen versehenen Plattform mittels einer hydraulischen Vorrichtung auf ein Betonfundament bewegt.

Bei dieser Bewegungsart muss das Niveau der Schienenwege von Fundament und Plattform jedoch genau übereinstimmen. Infolge unterschiedlicher Wärmedehnungen und Abnützungserscheinungen besonders an den Schienenstössen, bei Verunreinigung durch Schlackenreste und/oder Spritzeisen ist ein nahtloser Uebergang des Schienenstranges von Fundament zur Plattform oftmals nicht gewährleistet, sodass Erschütterungen des bewegten Ofenkessels unvermeidlich sind. Daraus können Schäden am Kessel und dessen feuerfester Auskleidung entstehen. Ausserdem ist zur Vermeidung seitlicher Verschiebungen an den Schienenstössen ein aufwendiges Blockierungs- bzw. Arretierungssystem erforderlich.

Hier will die Erfindung Abhilfe schaffen. Die Erfindung, wie sie in den Ansprüchen gekennzeichnet ist, löst die Aufgabe einen kippbaren Lichtbogenofen zu schaffen, dessen Ofenkessel auf einfache und sichere Art aus dem Bereich des Ofendeckels senkrecht zur Kipprichtung verfahren werden kann.

Die durch die Erfindung erreichten Vorteile sind im wesentlichen darin zu sehen, dass die zumindest einseitig um annähernd eine Ofenlänge verlängerte Plattform, die in ihrer gesamten Länge als Kippwiege ausgebildet ist, einen konstruktiv einheitlichen Aufbau aufweist, wobei keine grossen Kippmomente auftreten und aufwendige Blockierungs- und Arretierungssysteme entfallen können.

Entsprechend Anspruch 2 ruht die Tragkonstruktion des Ofenkessels auf einem Fahrschemel, der gemäss Anspruch 3 als Rollschemel ausgebildet und auf entsprechenden Schienen, die sich auf der Plattform befinden, verfahrbar ist.

Gemäss Anspruch 4 ist die Tragkonstruktion des Ofenkessels mit Schienen versehen, und die Plattform weist über die ganze Länge entsprechende Rollen bzw. Räder auf, die nach Anspruch 5 als Profilräder ausgebildet sind. Diese konstruktive Lösung ist einfach und es können serienmässig hergestellte Rollen bzw. Räder verwendet werden. Gemäss Anspruch 6, 7 und 8 sind sowohl die Tragkonstruktion des Ofenkessels mit Gleitstücken, die Plattform mit entsprechenden Gleitbahnen versehen, wobei die Gleitbahnen eine Gleitschicht, vorzugsweise Nylon® oder Teflon®, aufweisen. Zur hydrostatischen Entlastung der Gleitbahnen und Gleitstücke sind Anschlüsse für die Zufuhr eines Druckmediums vorgesehen. Der Vorteil dieser Variante liegt daran, dass keine rotierende Teile verwendet werden müssen, hingegen ist aber eine Hochdruckerzeugungsquelle für das Druckmedium notwendig.

Die Erfindung wird nachstehend anhand eines in der Zeichnung dargestellten Ausführungsbeispiels näher erläutert.

In der Zeichnung zeigt :

Figur 1 eine schematische Vorderansicht eines Lichtbogenofens, wobei sich der Ofenkessel in 2 Lagen befindet,

Figur 2 eine schematische Draufsicht gemäss Fig. 1,

Figur 3 eine schematische Seitenansicht gemäss Fig. 1,

Figur 4 eine schematische Seitenansicht eines Lichtbogenofens, der mit Gleitstücken bzw. Gleitbahnen ausgerüstet ist,

Figur 5 einen vergrösserten Querschnitt durch den Gleitmechanismus gemäss Fig. 4.

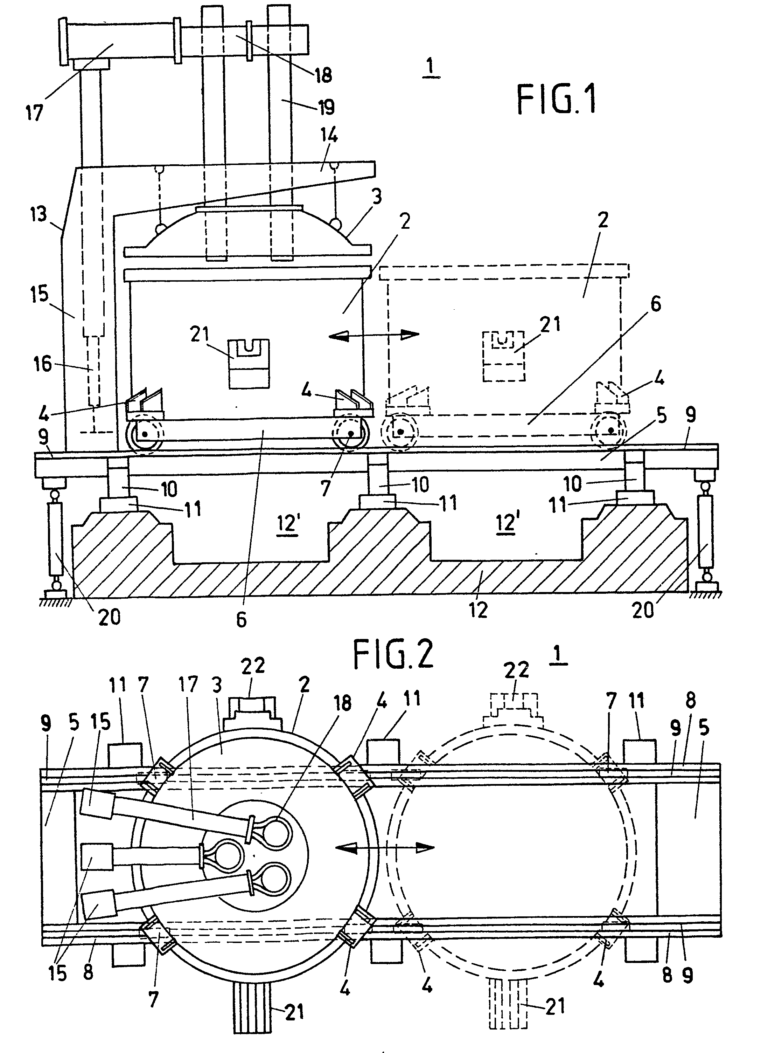

Gemäss Fig. 1 ist ein Ofenkessel 2 in zwei Lagen gezeichnet.

Die linke voll gezeichnete Lage ist die Arbeitslage für den Schmelzvorgang. Die rechts gestrichelt gezeichnete Lage ist die Lage des Ofenkessels 2 für den Beschickungsvorgang.

Ein Deckel 3 ist in angehobenem Zustand dargestellt, sodass er vom Ofenkessel 2 frei ist für die Bewegung des Kessels in die durch den Doppelpfeil gekennzeichneten Richtungen.

Der Lichtbogenofen 1 ist nur schematisch dargestellt. Die Tragkonstruktion 4 des Ofenkessels 2 ruht auf einem Fahrschemel 6, der sich auf Rädern 7 auf der Plattform 5 abstützt und so einen Rollschemel bildet.

Die Plattform 5 ist in diesem Beispiel mit drei Abwälzwiegen 10 abgestützt, die sich wiederum auf drei Wiegebalken 11 abwälzen können.

Die Wiegebalken 11 sind auf einem Fundament 12 angebracht. Auf der Plattform 5 ist ein Tragturm 13 befestigt, der sowohl eine Deckelhebevorrichtung 14 als auch drei Elektrodenstellsäulen 15 trägt. Die Elektroden-Stellsäulen 15 sind in der vertikalen Richtung mit angeordneten Elektroden-Stellzylindern 16 hydraulisch einzeln bewegbar verbunden. Die Elektroden-Stellsäulen 15 tragen Elektroden-Tragarme 17, an deren äusseren Enden in Elektroden-Fassungen 18 die Elektroden 19 gehalten werden.

Vier Hydraulikzylinder 20 die jeweils links und rechts an den Enden der Plattform 5 mit dieser verbunden sind, verursachen die Kippbewegungen des Lichtbogenofens 1 zum Ausgiessen der Schmelze und zum Abschlacken der Schmelze und sichern gleichzeitig die Lage der Plattform 5 in der Arbeitsstellung des Lichtbogenofens 1. Im Fundament 12 sind zwischen den Wiegebalken 11 Vertiefungen 12' angebracht, um eventuell grosse anfallende Schlackenmengen aufnehmen zu können und eine Berührung mit dem Unterteil des Ofenkessels 2 zu vermeiden. In Fig. 1 ist ausserdem die Giessschnauze 21 zu sehen.

Die meisten Teile die bei Fig. 1 beschrieben wurden, sind ebenfalls auf Fig. 2 zu sehen, die eine schematische Draufsicht gemäss Fig. 1 darstellt. In den weiteren Figuren sind die Funktionsteile mit den gleichen Bezugsziffern wie in Fig. 1 bezeichnet. In Fig. 2 sieht man die auf der Plattform 5 befestigten Schienen 9 sowie zusätzlich die Schlakkentür 22.

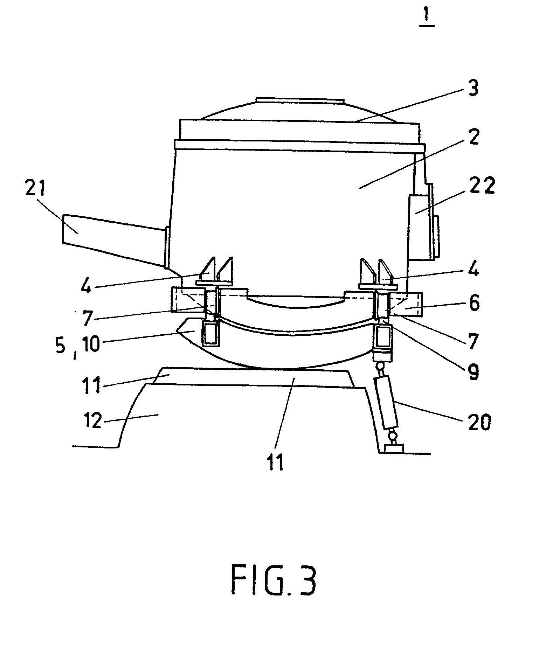

In Fig. 3-5 sind alle Teile, die nicht zum unmittelbaren Verständnis der Erfindung gehören, weggelassen worden. Sie sind bei der Beschreibung von Fig. 1 ausdrücklich betont.

Fig. 3 zeigt die Seitenansicht eines Lichtbogenofens gemäss Fig. 1 und 2. Der Ofenkessel 2 stützt sich mit der Tragkonstruktion 4 auf dem Fahrschemel 6 ab, der hier als Rollschemel ausgebildet und mit Rädern 7 versehen ist.

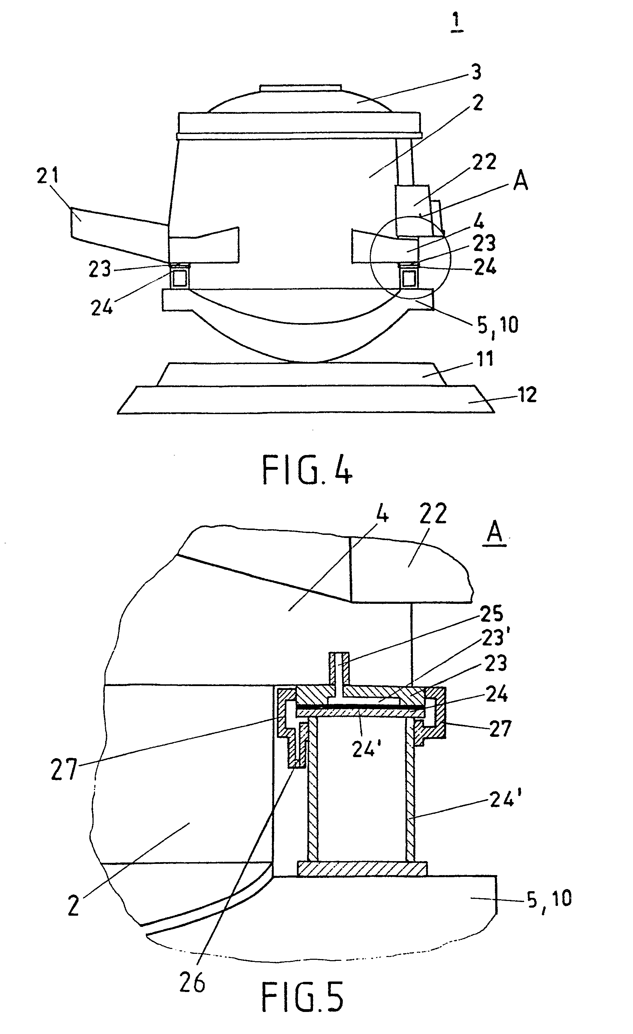

In Fig. 4 ist der Ofenkessel 2 an der Tragkonstruktion 4 mit Gleitstücken 23 ausgerüstet, sodass der Ofenkessel 2 quer zur Kipprichtung auf Gleitbahnen 24 verfahrbar ist.

Die Gleitstücke 23 bzw. die Gleitbahnen 24 sind im Detail in Fig. 5 gezeichnet.

Die Gleitbahn 24 ist mit einer Gleitschicht 24' versehen. Die Kontaktfläche der Gleitstücke 23 die im Mittelteil durch einen Hohlraum 23' unterbrochen ist, presst mit dem übrigen Teil gegen die Kontaktflächen der Gleitschicht 24' der Gleitbahn 24.

An den Hohlraum der Gleitstücke 23' ist eine nicht dargestellte Hochdruckerzeugungsquelle angeschlossen.

Zweckmässigerweise wird als Druckmittel Wasser verwendet. Ausserhalb der Gleitbahnen sind Gleitstückführungen 27 angebracht, die gleichzeitig als Auffangbehälter für das ausfliessende Druckmedium 27 dienen und mit einem Abfluss für das Druckmedium 26 versehen sind.

Das Verfahren des Lichtbogenofenkessels 2 mittels Gleitstücken 23 bzw. Gleitbahnen 24 geschieht wie folgt :

Im Ruhezustand wird in einer nicht weiter dargestellten Hochdruckerzeugungsquelle kein Ueberdruck erzeugt, sodass sich die Kontaktflächen der Gleitstücke 23 voll auf der Gleitschicht 24' der Gleitbahnen 24 abstützen können und somit ein grosser Reibungskoeffizient vorhanden ist. Wenn man nun den Ofenkessel 2 in die Chargierstellung verfahren will, erhöht man kontinuierlich oder stufenweise den Druck in der Druckmittelquelle und das Druckmedium dringt aus dem Hohlraum der Gleitstücke zwischen die Kontaktflächen der Gleitstücke 23 und der Gleitschicht 24' der Gleitbahnen 24 ein und bildet ein Gleitfilm der den Reibungskoeffizienten wesentlich herabsetzt und somit ein Verfahren mit geringem Kraftaufwand durchgeführt werden kann. Dabei fliesst ein Teil des Druckmediums in den seitlich über die gesamte Länge der Gleitbahnen 24 angebrachten Auffangbehälter für das Druckmedium 27 ab und gelangt schliesslich in den Abfluss für das Druckmedium 26, wo es dann zum Ausgangspunkt des Druckmittelkreislaufes zurückgepumpt wird.

Wenn die gewünschte Verfahrlage des Ofenkessels 2 erreicht ist, hebt man die Druckerzeugung in der Druckmittelquelle auf, der Gleitfilm zwischen den Kontaktflächen wird ausgedrückt, der Reibungskoeffizient erhöht und somit eine stabile Lage geschaffen.

Das Verfahren selbst kann durch geläufige Antriebsvorrichtungen, z. B. Seilzuggeschehen.

Bezeichnungsliste

1 Lichtbogenofen
2 Ofenkessel
3 Deckel
4 Tragkonstruktion
5 Plattform
6 Fahrschemel
7 Räder
8 Fahrwege
9 Schienen
10 Abwälzwiege
11 Wiegebalken
12 Fundament
12' Fundamentvertiefung
13 Tragturm

14 Deckelhebevorrichtung
15 Elektroden-Stellsäulen
16 Elektroden-Stellzylinder
17 Elektrodentragarm
18 Elektrodenfassung
19 Elektroden
20 Hydraulikzylinder
21 Giessschnauze
22 Schlackentür
23 Gleitstücke
23' Hohlraum der Gleitstücke
24 Gleitbahnen
24' Gleitschicht
25 Anschluss für Druckmedium
26 Abfluss für Druckmedium
27 Gleitstückführung mit Auffangbehälter für Druckmedium

**Ansprüche**

1. Kippbarer Lichtbogenofen, mit einem auf einer Tragkonstruktion (4) angeordneten Ofenkessel (2) und einem Deckel (3), wobei der Ofen über einer Plattform (5) auf Abwälzwiegen (10) abgestützt ist und der Ofenkessel (2) wenigstens im wesentlichen senkrecht zur Kipprichtung verfahrbar ist, dadurch gekennzeichnet, dass die Plattform (5) zumindest einseitig in Verfahrrichtung um mindestens annähernd eine Ofenkesselbreite verlängert ist, und in ihrer gesamten Länge als Abwälzwiege (10) ausgebildet ist.

2. Kippbarer Lichtbogenofen nach Anspruch 1, dadurch gekennzeichnet, dass die Tragkonstruktion (4) des Ofenkessels (2) auf einem Fahrschemel (6) ruht und die Plattform (5) mit entsprechenden Fahrwegen (8) versehen ist.

3. Kippbarer Lichtbogenofen nach Anspruch 2, dadurch gekennzeichnet, dass der Fahrschemel (6) als Rollschemel ausgebildet ist, und die Fahrwege (8) Schienen (9) umfassen.

4. Kippbarer Lichtbogenofen nach Anspruch 2, dadurch gekennzeichnet, dass die Tragkonstruktion (4) des Ofenkessels (2) mit Schienen (9) und die Plattform (5) mit auf der ganzen Länge entsprechenden Rollen bzw. Rädern (7) versehen ist.

5. Kippbarer Lichtbogenofen nach Anspruch 3 oder 4, dadurch gekennzeichnet, dass die Räder (7) Profilräder sind, die die Lage der Tragkonstruktion (4) des Ofenkessels (2) gegenüber der Plattform (5) quer zur Verfahrrichtung fixieren.

6. Kippbarer Lichtbogenofen nach Anspruch 1 oder 2, dadurch gekennzeichnet, dass die Tragkonstruktion (4) des Ofenkessels (2) mit Gleitstücken (23) und die Plattform (5) mit entsprechenden Gleitbahnen (24) versehen sind.

7. Kippbarer Lichtbogenofen nach Anspruch 6, dadurch gekennzeichnet, dass die Gleitstücke (23) oder die Gleitbahnen (24) mit einer Gleitschicht (24') versehen sind.

8. Kippbarer Lichtbogenofen nach Anspruch 6, dadurch gekennzeichnet, dass an den Gleitstücken (23) Anschlüsse (25) für die Zufuhr eines Druckmediums zur hydrostatischen Entlastung vorgesehen sind.

**Claims**

1. Tiltable arc furnace possessing a furnace shell (2) which is mounted on a supporting structure (4), and possessing a roof (3), the furnace being supported, above a platform (5), on rolling-contact cradles (10) and the furnace shell (2) being displaceable, at least in a direction essentially perpendicular to the direction of tilting, characterised in that the platform (5) is made longer in the displacement direction, at least on one side, by an amount which approximates at least to one furnace shell width, and its designed as a rolling-contact cradle (10) over its entire length.

2. Tiltable arc furnace according to Claim 1, characterised in that the structure (4) supporting the furnace shell (2) rests on a movable car (6), while the platform (5) is provided with appropriate runways (8).

3. Tiltable arc furnace according to Claim 2, characterised in that the movable car (6) is designed as a carrier truck, and the runways (8) incorporate rails (9).

4. Tiltable arc furnace according to Claim 2, characterised in that the structure (4) supporting the furnace shell (2) is provided with rails (9), while the platform (5) is provided with corresponding rollers or wheels (7), as appropriate, over the entire length.

5. Tiltable arc furnace according to Claim 3 or 4, characterised in that the wheels (7) are of the profiled type, and fix the position of the structure (4) supporting the furnace shell (2) relative to the platform (5), at right angles to the displacement direction.

6. Tiltable arc furnace according to Claim 1 or 2, characterised in that the structure (4) supporting the furnace shell (2) is provided with sliders (23), while the platform (5) is provided with corresponding slideways (24).

7. Tiltable arc furnace according to Claim 6, characterised in that the sliders (23) or the slideways (24) are provided with a low-friction coating (24').

8. Tiltable arc furnace according to Claim 6, characterised in that connections (25) are installed at the sliders (23), these connections (25) enabling a pressure medium to be supplied for the purpose of hydrostatic load-relief.

**Revendications**

1. Four basculant à arc électrique, avec une cuve de four (2) montée sur un dispositif de support (4) et un couvercle (3), le four étant supporté par des berceaux de basculement (10) sur une plate-forme (5) et la cuve de four (2) étant déplaçable au moins dans un sens essentiellement perpendiculaire à la direction de basculement, caractérisé en ce que la plate-forme (5) est prolongée au moins d'un côté dans la direction du déplacement et au moins sur une longueur correspondant environ à une largeur de cuve de four, et qu'elle est conçue sur toute sa longueur sous la forme d'un berceau de basculement (10).

2. Four basculant à arc électrique selon revendication 1, caractérisé en ce que le dispositif de support (4) de la cuve de four (2) repose sur une traverse mobile (6) et que la plate-forme (5) est pourvue de chemins de déplacement (8) correspondants.

3. Four basculant à arc électrique selon revendication 2, caractérisé en ce que la traverse mobile (6) est constituée sous forme d'une traverse roulante et que les chemins de déplacement (8) comprennent des rails (9).

4. Four basculant à arc électrique selon revendication 2, caractérisé en ce que le dispositif de support (4) de la cuve de four (2) est pourvu de rails (9) et que la plate-forme (5) est pourvue sur toute sa longueur de rouleaux ou de roues correspondantes (7).

5. Four basculant à arc électrique selon revendication 3 ou 4, caractérisé en ce que les roues (7) sont des roues profilées, qui déterminent la position du dispositif de support (4) de la cuve de four (2) par rapport à la plate-forme (5) transversalement à la direction de déplacement.

6. Four basculant à arc électrique selon revendication 1 ou 2, caractérisé en ce que le dispositif de support (4) de la cuve de four (2) est pourvu de patins (23) et que la plate-forme (5) est équipée de glissières correspondantes (24).

7. Four basculant à arc électrique selon revendication 6, caractérisé en ce que les patins (23) ou les glissières (24) sont pourvus d'une surface de glissement (24').

8. Four basculant à arc électrique selon revendication 6, caractérisé en ce que des raccordements (25) pour l'adduction d'un fluide sous pression en vue du délestage hydrostatique sont prévus dans les patins (23).

FIG.1

FIG.2

FIG. 3

FIG.4

FIG.5